**Europäisches Patentamt**

**European Patent Office**

**Office européen des brevets**

(19)

(11) Publication number: **0 045 421**
**A2**

(12) # EUROPEAN PATENT APPLICATION

(21) Application number: **81105642.3**

(22) Date of filing: **17.07.81**

(51) Int. Cl.³: **B 29 F 1/10**
**B 29 C 17/04**

(30) Priority: **31.07.80 JP 105679/80**

(43) Date of publication of application:
**10.02.82 Bulletin 82/6**

(84) Designated Contracting States:
**DE FR GB IT**

(71) Applicant: **NISSAN MOTOR COMPANY, LIMITED**
No.2, Takara-cho, Kanagawa-ku
Yokohama-shi Kanagawa-ken(JP)

(72) Inventor: **Fukunaga, Yukio**
B-504, 3-8, Ikego
Zushi-shi Kanagawa-ken(JP)

(72) Inventor: **Okada, Yasuhiro**
2-12-36, Sugita Isogo-ku
Yokohama-shi Kanagawa-ken(JP)

(72) Inventor: **Furuya, Nobuo**
1486-5, Omote-zionzi
Iwatsuki-shi Saitama-ken(JP)

(72) Inventor: **Nakabayashi, Isao**
56-12, Nara-cho
Omiya-shi Saitama-ken(JP)

(72) Inventor: **Goto, Tetsuro**
56-12, Nara-cho
Omiya-shi Saitama-ken(JP)

(74) Representative: **Ter Meer-Müller-Steinmeister**
**Patentanwälte**
**Triftstrasse 4**
**D-8000 München 22(DE)**

(54) **Fabric-surfaced molded composite article and process for its preparation.**

(57) A fabric-surfaced molded composite article comprising a web of a fabric (2), an intermediate layer (3) of a synthetic resin lining the fabric web and an outer layer (15) of a synthetic resin which is fusion bonded to the intermediate layer (3). The fabric web (2) and the intermediate layer (3) are initially prepared in the form of a laminated sheet structure (1), which is then processed in a mold operable as a vacuum forming mold for forcing the laminated sheet structure (1) to be deformed into predetermined configuration by a suction developed in the mold and further as an injection mold into which a synthetic resin of a molten state is injected to form the outer layer (15) of the synthetic resin on the intermediate layer (3) of the synthetic resin.

# FIG. 7

0045421

PATENTANWÄLTE

# TER MEER-MÜLLER-STEINMEISTER

Beim Europäischen Patentamt zugelassene Vertreter — Professional Representatives before the European Patent Office
Mandataires agréés près l'Office européen des brevets

Dipl.-Chem. Dr. N. ter Meer    Dipl.-Ing. H. Steinmeister
Dipl.-Ing. F. E. Müller        Artur-Ladebeck-Strasse 51
Triftstrasse 4,
D-8000 MÜNCHEN 22              D-4800 BIELEFELD 1

tM/cb

Case: 1-1053-040                July 17. 1981

NISSAN MOTOR COMPANY, LIMITED

2, Takara-cho, Kanagawa-ku, Yokohama-shi

Kanagawa-ken, Japan

- 1 -

Fabric-surfaced molded composite article and process for
its preparation

Priority: July 31, 1980, Japan, No. 105679/1980

## Field of the Invention

The present invention relates to a fabric-surfaced molded composite article and to a process of forming such an article.

## Background of the Invention

An object of the present invention is to provide a fabric-surfaced molded composite article which may be formed with a sharply curved depression or protrusion and which nevertheless has no fissures and wrinkles produced therein.

Another object of the present invention is to provide a process of forming such an improved fabric-surfaced molded composite article.

It is, yet, another object of the present invention to provide a process of forming a fabric-surfaced molded composite article by the use of a mold which is operable not only as a split—type injection mold but also as a vacuum forming mold so as to achieve an increased efficiency in the production of such articles on a commercial basis.

## Summary of the invention

In accordance with one important aspect of the present invention, there is provided a fabric-surfaced molded composite article which comprises a web of a fabric, an intermediate layer of a synthetic resin applied to one of the fabric web and an outer layer of a synthetic resin which is fusion bonded to the intermediate layer.

The synthetic resin forming the intermediate layer may be selected from the group of thermoplastic synthetic resins including polyvinyl chloride resins, vinyl acetal resins, vinyl acetate resins, cellulose acetate resins and polycarbonates.

On the other hand, the synthetic resin forming the outer layer may be selected from the group of thermoplastic synthetic resins including polystyrene, polyvinyl chloride, acrylic resins, polyamide resins, cellulosic resins, polyurethane resins and foams of these.

Furthermore, the web of the fabric forming part of the molded composite article according to the present invention may be selected from the group consisting of woven nylon (polyamide) fabrics, non-woven nylon (poly-

BAD ORIGINAL

amide) fabrics, woven acrylic fabrics, non-woven acrylic fabrics, wool fabrics, cotton fabrics and leather.

In accordance with another important aspect of the present invention, there is provided a process of forming a fabric-surfaced molded composite article, comprising the steps of forming a laminated sheet structure consisting of a web of a fabric and a layer of a synthetic resin lining the fabric web, heating the sheet structure for softening the synthetic resin forming the above mentioned layer, holding the sheet structure in place between first and second dies in such a manner that the layer of the synthetic resin faces the first die and the fabric web faces the second die, the first and second dies forming part of a split injection mold adapted to form a cavity between the dies when the mold is closed, developing a suction between the first die and the layer of the synthetic resin for forcing the sheet structure against the first die and thereby deforming the sheet structure into a predetermined configuration, clamping the first and second dies together for closing the injection mold with the sheet structure forced against the first die by the aforesaid suction, and injecting a molten synthetic resin between the layer of the synthetic resind and the first die for forming an outer layer of the synthetic resin which is fusion bonded to the layer of the synthetic.resin lining the fabric web and thus forming an intermediate layer between the fabric web and the aforesaid outer layer. In the process according to the present invention, the suction may be developed between the first die and the layer of the synthetic resin of the laminated sheet structure through a passageway formed in the first die and open to the layer of the synthetic resin forming part of the sheet structure. In this instance, a metallic filter is preferably provided between the terminal end of the passageway in the first die and the layer of the synthetic resin forming part of the laminated sheet structure.

Brief description of the drawings

The features and advantages of the fabric-surfaced molded composite structure according to the present invention and of the process of forming such a molded composite article in accordance with the present invention will be understood more clearly from the following description in which:

Fig. 1 is a cross sectional view of a laminated sheet structure forming part of a fabric-surfaced molded composite article according to the present invention;

Fig. 2 is a sectional view showing dies of a split-type plastic injection mold held in an open condition with the laminated sheet strucutre of Fig. 1 stretched intermediate between the dies;

Fig. 3 is a view which is similar to Fig. 2 but in which the laminated sheet structure is shown stretched on one of the dies of the injection mold;

Fig. 4 is a view which is also similar to Fig. 2 but in which the laminated sheet structure is closely held against one of the dies by a suction developed by the sheet structure and the particular die;

Fig. 5 is a sectional view showing the dies of the injection mold in a closed condition with the laminated sheet structure interposed between the dies which are clamped together;

Fig. 6 is a view which is similar to Fig. 5 but in which is shown an outer layer of a synthetic resin formed on the initial laminated sheet structure; and

Fig. 7 is a fragmentary sectional view showing a portion of an article produced by the process illustrated in Figs. 2 to 6, the article constituting an embodiment of a fabric-surfaced molded composite article according to the present invention.

Detailed description of the invention

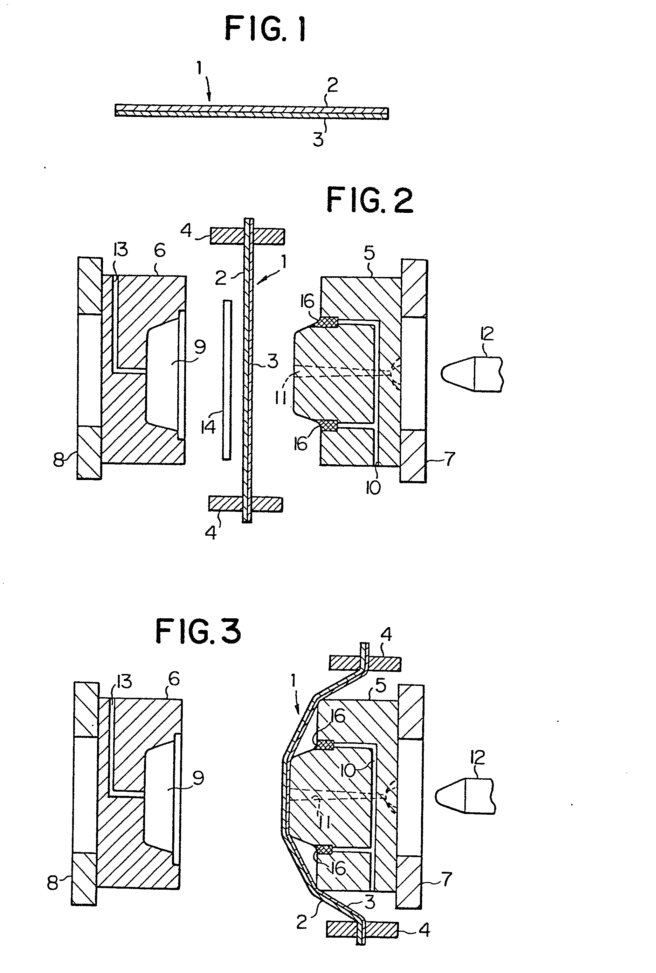

Referring to the drawings, first particularly to Fig. 1 thereof, a fabric-surfaced molded composite article embodying the present invention is produced by processing a laminated sheet structure 1 which comprises a web 2 of, for example, a nylon fabric and a layer 3 of a thermoplastic synthetic resin such as, for example, a polyvinyl chloride resin applied to one face of the fabric web 2. Such a sheet structure 1 may be prepared by coating the fabric web 2 with the synthetic resin in a molten state and thereafter drying the resultant sheet structure until the synthetic resin is set to form the layer 3.

The laminated sheet structure 1 having the fabric web 2 thus lined with the layer 3 of the synthetic resin is secured along its marginal portions to a web retainer frame 4 in such a manner that the sheet structure 1 is stretched intermediate between first and second dies 5 and 6 of a split-type plastic injection mold. At this stage of the process according to the present invention, the injection mold is held in an open condition having the first and second dies 5 and 6 spaced apart from each other on both sides of the laminated sheet structure 1 retained to the web retainer frame 4.

In the arrangement illustrated in the drawings, the first and second dies 5 and 6 are assumed, by way of example, as stationary and movable dies, respectively. The first die 5 is thus securely attached to a stationary die support member 7 and the second die 6 is carried on a movable die support member 8 forming part of a suitable die clamping apparatus adapted to drive the second die 6 to move toward and away from the stationary first die 5. The first and second dies 5 and 6 are further assumed herein as being male and female dies, respectively, but this is merely for the purpose of illustration. Thus, the process according to the present invention may be carried out with use of any split-type injection mold insofar as the mold has two dies at least one of which is movable toward and away from the other die and which are internally so shaped as to form a cavity therebetween when the mold is closed with the dies clamped together. In the arrangement herein shown, such a cavity is formed by a concavity 9 in the second die 6.

The first die 5 is formed with a vacuum passageway 10 and an injection passageway 11, the passageways 10 and 11 being open at the inner face of the die 5 toward the second die 6. Though not shown in the drawings, the vacuum passageway 10 is communicable with a suitable source of vaccum through a suitable vacuum shut-off valve. The injection passageway 11 outwardly terminates in a dished concavity adapted to have received therein a nozzle 12 projection from a suitable plastic extrusion jead which is well known in the art and which is adapted to supply a thermoplastic synthetic resin in a molten state to the nozzle 12 when actuated. On the other hand, the second die 6 is formed with an air vent 13 which is open at one end thereof to the concavity 9 and at the other end thereof to the atmosphere.

The web retainer frame 4 is constructed and arranged to be movable in a direction in which the second die 6 is to be moved toward and away from the first die 5. At the stage when the laminated sheet structure 1 is initially stretched intermediate between the first and second dies 5 and 6, the movable second die 6 is spaced apart from the stationary first die 5 and, furthermore, the web retainer frame 4 is maintained in a position having the sheet structure 1 spaced apart from both of the dies 5 and 6. In this instance, it is important that the laminated sheet structure 1 be retained to the web retainer frame 4 in such a manner that the layer 3 of the synthetic resin of the sheet structure 1 faces the first die 5 and the fabric web 2 of the sheet structure 1 faces the second die 6 as shown.

After or by the time when the laminated sheet structure 1 is thus stretched between the dies 5 and 6 which are spaced apart from each other, a suitable heating device 14 is positioned between the second die 6 and the laminated sheet structure 1 or, more specifically, adjacent the outer face of the fabric web 2 forming part of the sheet structure 1. The heating device 14 is thus operative to heat the laminated sheet structure 1 to a temperature higher than the softening temperature of the synthetic resin forming the layer 3 of the sheet structure 1. As a consequence, the synthetic resin forming the layer 3 is softened and accordingly made flexible. After the layer 3 of the laminated sheet structure 1 is thus softened and made flexible, the heating device 14 is removed from the operative position between the dies 5 and 6 and thereafter the web retainer frame 4 is moved to move the laminated sheet structure 1 until the sheet structure 1 convers the inner face of the first die 5 as shown in Fig. 3 of the drawings.

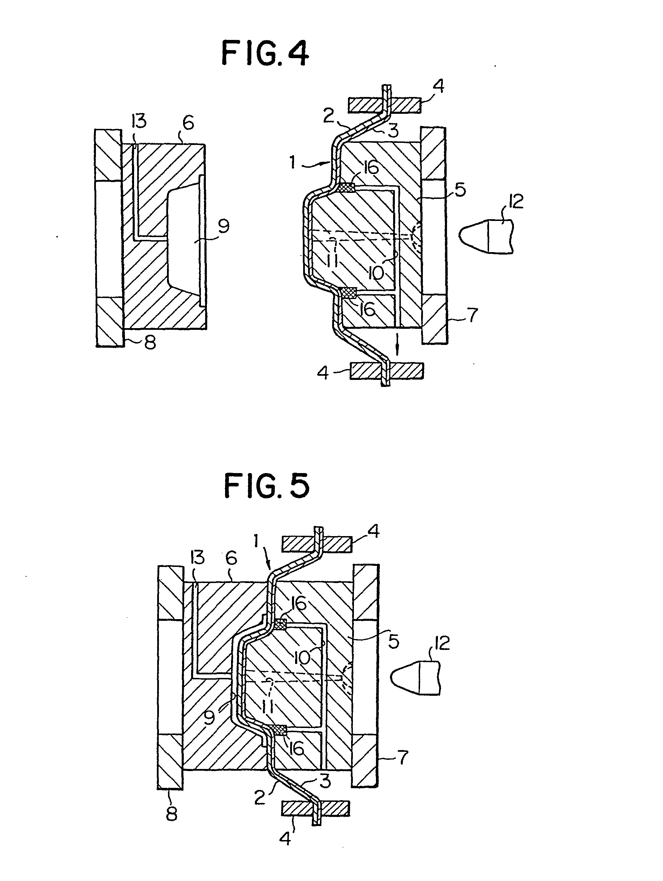

The vacuum shut-off valve provided between the vacuum source and the vacuum passageway 10 in the first die 5 is then manipulated to open. The air which has been entrapped between the laminated sheet structure 1 or, more specifically, the softened layer 2 of the sheet structure 1 and the inner face of the first die 5 is consequently forced out of the passageway 10 and a suction is developed therebetween. The suction causes the laminated sheet structure 1 to be closely held against the inner face of the first die 5 and as a consequence deformed into a predetermined configuration dictated by the configuration of the inner face of the die 5 as shown in Fig. 4 of the drawings.

After the laminated sheet structure 1 is this closely attached to the inner face of the first die 5, the previously mentioned die clamping device provided in association with the movable second die 6 is actuated to have the second die 6 clamped to the stationary first die 5 as shown in Fig. 5 of the drawings. The injection mold being closed with the first and second dies 5 and 6 clamped together, the laminated sheet structure 1 is closely interposed between the dies 5 and 6 and has a portion disposed in the cavity between the dies. In the arrangement herein shown, the cavity between the dies 5 and 6 is formed by the concavity 9 in the second die 6 as previously noted, the above mentioned portion of the laminated sheet structure 1 being thus exposed to the concavity 9 in the second die 6.

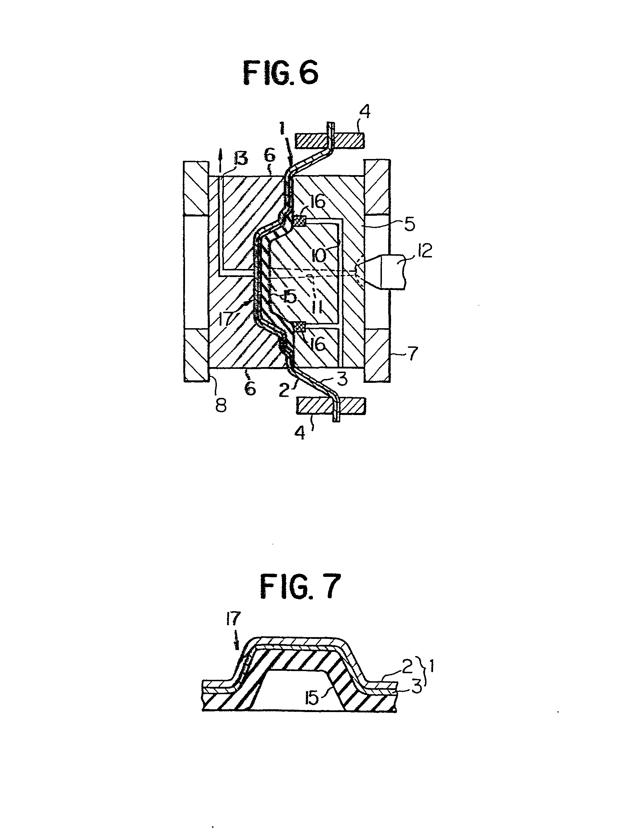

After the injection mold is closed with the second die 6 clamped to the first die 5 as above discussed, the vacuum shut-off valve is operated to close so as to block the communication between the vacuum source and the vacuum passageway 10 in the first die 5. The injection nozzle 12 is now axially moved to project into the dished depression in the first die 5 as shown in Fig. 6 of the drawings, and thereafter the previously mentioned plastic extrusion head is actuated to inject a suitable thermoplastic synthetic resin of a molten state from the injection nozzle 12 into the injection passageway 11 in the first die 5. The molten synthetic resind thus injected into the injection passageway 11 forces, at the terminal end of the passageway 11, against the layer 3 of the laminated sheet structure 1, which is as a consequence forced away from the inner face of the die 5 and thus forms an interstice between the layer 3 and the inner face of the die 5. The molten injection resin injected into the passageway 11 is therefore further injected into the interstice between the layer 3 and the inner face of the die 5 and ultimately forms an outer layer 15 of the molten thermoplastic synthetic resin as will be seen from Fig. 6. As the molten synthetic resin is injected from the injection passageway 11 into the interstice formed between the layer 3 of the laminated sheet structure 1 and the inner face of the first die 5 as above described, the fabric web 2 forming part of the laminated sheet structure 1 is forced against the inner face of the second die 6 so that the air which has been entrapped in the concavity 9 in the second die 6 is discharged to the open air through the air vent 13 in the die 6.

If desired, suitable filter means such as a metallic filter 16 may be provided at the terminal end or each of the terminal ends of the vacuum passageway 1o so as to prevent the molten synthetic resin from being admitted into the passageway 10 and thereby clogging the passageway 10 during formation of the outer layer 15.

When the molten thermoplastic synthetic resin forming the outer layer 15 thus fusion bonded to the layer 3 of the initial laminated sheet structure 1 is cooled and set, there is produced between the first and second dies 5 and 6 a fabric-surfaced molded composite article 17 having the outer layer 15 fusion bonded to the layer 3 of the initial laminated sheet structure 1. At this stage, the previously mentioned die clamping apparatus is operated to have the second die 6 moved away from the first die 5 with the molded composite article 17 left on the first die 5. The article 17 is then released from the web retainer frame 4 and withdrawn from the first die 5. The fabric-surfaced molded composite article 17 obtained in this fashion comprises, as illustrated to an enlarged scale in Fig. 7 of the drawings, the web 2 of, for example, the nylon fabric, the intermediate layer 3 of, for example, the polyvinyl chloride resin applied to one face of the fabric web 2, and the above mentioned outer layer 15 which is fusion bonded to the intermediate layer 3.

As will have been appreciated from the foregoing description, a fabric-surfaced molded composite article proposed by the present invention can be formed without producing fissures and wrinkles therein even when the dies 5 and 6 of the injection mold put to use may have sharply curved depressions and protrusions. Furthermore, the split-type plastic injection mold used to carry out a process according to the present invention to form such an article is operable not only as the injection mold as a vacuum forming mold for forcing the initial laminated sheet structure 1 against the inner face of the first die 5. Thus, the present invention allows to achieve an increased efficiency in the production of fabric-surfaced molded composite articles and to improve the commercial value, particularly the external appearance of a fabric-surfaced molded composit article which is ordinarily used the web of the fabric exposed to the outside.

Claims:

1.    A fabric-surfaced molded composite article characterized by a web of a fabric (2), an intermediate
layer (3) of a synthetic resin applied to one face of
the fabric web (2) and an outer layer (15) of a synthetic resin which is fusion bonded to said intermediate
layer (3) (Fig. 7).

2.    A fabric-surfaced molded composite article as set
forth in claim 1, characterized in that the synthetic
resin forming said intermediate layer (3) is selected
from the group of thermoplastic synthetic resins including polyvinyl chloride resins, vinyl acetal resins,
vinyl acetate resins, cellulose acetate resins and polycarbonates.

3.    A fabric-surfaced molded composite article as set
forth in claim 1 or 2, characterized in that the synthetic resin forming said outer layer (15) is selected
from the group of thermoplastic synthetic resins including polystyrene, polyvinyl chloride, acrylic resins,
polyamide resins, cellulosic resins, polyurethane resins
and foams of these.

4.    A fabric-surfaced composite molded article as set
in claim 3, characterized in that said fabric (2) is
selected from the group consisting of woven nylon fabrics, non-woven nylon fabrics, woven acrylic fabrics,
non-woven acrylic fabrics, wool fabrics, cotton fabrics,
and leather.

5.    A process of producing a fabric-surfaced molded
composite article, characterized by the steps of

a) forming a laminated sheet structure consisting of a web of a fabric and a layer of a synthetic resin lining the fabric web,

b) heating the sheet structure for softening the synthetic resin forming said layer,

c) holding the sheet structure in place between first and second dies in such a manner that the layer of the synthetic resin faces the first die, the first and second dies forming part of a split injection mold adapted to form a cavity between the dies when the mold is closed,

d) developing a suction between the first die and said layer of the synthetic resin for forcing the sheet structure against the first die and thereby deforming the sheet strucutre into a predetermined configuration,

e) clamping the first and second dies together for closing the mold with said sheet structure forced against the first die by said suction, and

f) injecting a molten synthetic resin between said layer of the synthetic resin and said first die for forming on outer layer of the synthetic resin which is fusion bonded to the layer of the synthetic resin lining said web of the fabric.

6.    A process as set forth in claim 5, characterized in that said suction is developed through a passageway formed in said first die and open to the layer of the synthetic resin forming part of said laminated structure, wherein a metallic filter is provided at a terminal end of the passageway in the first die.

## FIG. 1

## FIG. 2

## FIG. 3

# FIG.4

# FIG.5

3/3

# FIG. 6

# FIG. 7